Europäisches Patentamt

European Patent Office

Office européen des brevets

(11) Publication number: **0 077 639**
**B1**

# EUROPEAN PATENT SPECIFICATION

(45) Date of publication of patent specification: **24.07.85**

(51) Int. Cl.⁴: **A 23 L 1/236**

(21) Application number: **82305456.4**

(22) Date of filing: **14.10.82**

(54) Flavouring composition and process for producing that composition.

(30) Priority: **15.10.81 US 311572**

(43) Date of publication of application:
**27.04.83 Bulletin 83/17**

(45) Publication of the grant of the patent:
**24.07.85 Bulletin 85/30**

(84) Designated Contracting States:
**BE CH DE FR GB LI SE**

(56) References cited:
**AU-B- 419 938**
**DE-A-2 409 107**
**FR-A-2 144 939**
**US-A-2 904 440**
**US-A-4 208 431**

(73) Proprietor: **WARNER-LAMBERT COMPANY**
**201 Tabor Road**
**Morris Plains New Jersey 07950 (US)**

(72) Inventor: **Glass, Michael**
**156-11 Aguilar Avenue**
**Flushing NY 11367 (US)**

(74) Representative: **Jones, Michael Raymond et al**
**HASELTINE LAKE & CO. Hazlitt House 28**
**Southampton Buildings Chancery Lane**
**London WC2A 1AT (GB)**

Courier Press, Leamington Spa, England.

This invention relates to flavouring compositions containing sorbitol, which can be used in candy and chewing gum, and to the production of such flavouring composition.

While a wide variety of flavouring compositions have been formulated for incorporation into candies and chewing gums, one of the problems attending the development of these products in novel flavour forms, has been the tendency of the flavour to diminish rapidly in intensity, and thereafter disappear within a relatively short period of time. This deficiency is most noteworthy in the instance of chewing gums, as flavour loss frequently occurs within the first four or five minutes of chewing.

A similar problem is observed in the instance where the product is stored for a period of time between manufacture and consumption. The flavours likewise tend to exhibit undesirably limited shelf stability, and, in some cases, may diminish to an unacceptably low level within one month after storage.

Several efforts have been made to remedy the aforenoted deficiencies of flavours in encapsulated forms. Specifically, U.S. Patents Nos. 3,795,744 and 3,826,847, by Ogawa et al., encapsulate a variety of flavouring agents by homogeneously dispersing the flavouring agents in a solution of water-soluble high molecular weight compounds, such as polyvinyl esters and cellulose derivatives. The approach taken in Ogawa et al. possesses certain drawbacks, in that the high molecular weight material must be combined with plasticizers and solvents, before the addition of the flavouring agents, and precipitation of beads encapsulating the flavouring agent is accomplished by the addition of a hydrocarbon solvent such as hexane, which must thereafter be volatized off. Thus, in addition to introducing undesirable compounds, the Ogawa et al. preparation is unduly complex.

Further activity in the area of encapsulation of food additives has centred around the efforts to prolong the stability of the artificial dipeptide sweetener Known commonly as APM. In particular, U.S. Patent No. 3,928,633 to Shoaf et al. Proposes to encapsulate APM by dispersion within a material capable of being processed by hot melt techniques, and thereafter cooled to form an amorphous matrix containing the APM. The patent discloses, as one of the acceptable hot melt ingredients, polyhydric alcohols such as sorbitol. While the disclosure of Shoaf et al. may be relevant to the encapsulation of APM, the temperatures at which the patented procedure operates, are too high for the encapsulation of many desirable flavouring agents, which would be lost to volatization, if they were incorporated into the encapsulant matrix. Sorbitol itself congeals at a temperature that is too high to permit it to operate individually as an effective encapsulant. Also, the chemistry of APM differs from that of food flavouring agents, and analogies in the operation and effect of encapsulants may not be properly drawn.

A specific preparation of sorbitol encapsulated flavouring agents is disclosed in U.S. Patent No. 2,904,440 to Dimick et al. The patentees attempt to improve shelf stability by pretreating the flavour essence to remove certain low molecular weight alcohols, and compounds that behave like such alcohols. The patentees suggest that these alcohols inhibit the solidification of the sorbitol matrix, and attack the solified matrix to cause it to break down and release the flavour.

Apart from this pretreatment of the flavouring agent, however, Dimick et al. conform to the prior art, as they merely incorporate the treated flavouring agent into melted sorbitol, add some seed crystals of sorbitol, and cool the melt to about 80°C to commence crystallization. The nature of this processing, however, fails to encapsulate and safely retain the flavouring agent completely within the sorbitol matrix, and the Dimick et al. preparation is inoperable for those flavouring agents that volatize at the processing temperatures above 70°C.

A need therefore exists to develop a process and associated product that extends the shelf life of a wide variety of flavouring agents, without introducing undesired synthetic compounds to the ultimate food product, and which may be accomplished with a minimum expenditure of material, energy and time.

According to the present invention, there is provided a flavouring composition comprising:

a eutectic mixture of:— sorbitol, from 5% to 6% by weight of mannitol, and from 0.15% to 0.16% by weight of saccharin, the term "saccharin" including saccharin itself and edible salts thereof;

dispersed in the eutectic mixture, at least one flavouring agent in an amount of up to 11% by weight; and

from 0 to 7% by weight of seed particles containing a quantity of sorbitol;

wherein the percentages are based on the weight of the flavouring composition, and the balance of the composition is essentially the sorbitol of the eutectic mixture.

Thus, in accordance with the present invention, a flavouring composition is prepared which comprises a mixture of the sugar alcohols, sorbitol and mannitol, together with a quantity of saccharin, and at least one flavouring agent dispersed within the mixture of the sugar alcohols and saccharin. The saccharin content of the mixture is approximately 3% by weight based on the mannitol content of the mixture, the actual limits of the ratio of saccharin to mannitol being determinable from the ranges of the contents of the saccharin and mannitol indicated above.

The remainder of the present flavouring composition may comprise up to 11% by weight of flavouring agent, and preferably up to 10% by weight. Preferably, a portion of the aforementioned ingredients is added as seed particles containing sorbitol. The seed particles may either be derived from a previously prepared flavouring composition or may comprise sorbitol, alone. The seed particles are preferably added in an amount of up to 7% by weight, to promote crystallization of the composite, as described later herein. Also, the sorbitol employed herein may be, but does not need to be, of the type that forms a gamma polymorphic crystal structure.

One of the features of the present invention is that the presence of the mannitol and saccharin components, especially within the aforementioned proportions with respect to each other, substantially lowers the melting point of sorbitol, to within a temperature range that facilitates the efficient incorporation into the mixture of a variety of volatile flavouring agents. Thus, the eutectic mixture of sorbitol, mannitol and saccharin when prepared within the aforementioned ranges, exhibits a melting point less than 70°C, which facilitates flavour addition without unwanted volatization or "flash off", and the corresponding loss of flavouring agent during preparation.

The present invention provides a process for preparing a flavouring composition, which process comprises:

(a) preparing a eutectic mixture of:— sorbitol, from 5% to 6% by weight mannitol and from 0.15% to 0.16% by weight saccharin;

(b) heating that mixture to a temperature of approximately 200°C;

(c) cooling that mixture to a temperature below 70°C;

(d) adding at least one flavouring agent, in an amount of up to 11% by weight, to the cooled mixture under agitation to disperse uniformly the flavouring agent therein;

(e) adding to the mixture under agitation, up to 7% by weight of seed particles containing a quantity of sorbitol;

(f) permitting the resulting mixture to solidify; and

(g) recovering the flavouring composition;

wherein the total amount of sorbitol added is essentially equivalent to the balance of the composition, all percents being based on the weight of the composition.

In practice, the sorbitol crystallizes and solidifies rapidly, and the resulting flavouring composition may be quickly recovered, in sheet, droplet or particulate form.

The present flavouring composition possesses a variety of applications, and may be incorporated with other ingredients as the flavour component of a variety of comestible products, including candy, chewing gums, and baked goods. In the instance where the present composition in cast into droplet or tablet form, it forms individual sugarless candies which may be consumed as such.

In a preferred embodiment, the present flavouring composition is prepared in granular form, to serve as flavour beads for addition to a variety of products where a long lasting flavour component is desirable. The present flavouring composition exhibits improved shelf stability, and may be stored for periods of up to a year with acceptable flavour loss.

Thus the present invention makes it possible to produce a flavouring composition utilizing sorbitol as a primary encapsulant, which contains a minimum of ingredients therein, and may be achieved by a process which is simply and rapidly practised.

Both sorbitol and mannitol are well known sugar alcohols that have been utilized in comestible products as excipients, carriers sweeteners, and bulking agents in chewing gums. Both sorbitol and mannitol are available from natural plant sources, and may be prepared by the electrolytic reduction of glucose, and by techniques well known in the art.

One of the features of the present invention comprises the combination of sorbitol, mannitol and saccharin, to facilitate the use of sorbitol as an encapsulating medium for a flavouring agent. One of the difficulties experienced in the prior art, as noted earlier, is that sorbitol alone possesses an undesirably high congealing point, of the order of about 90°C, that renders the incorporation of many volatile flavouring agents impractical or impossible. The combination of mannitol and saccharin, in the proportions with respect to each other whereby saccharin is present in an amount of about 3% by weight of the mannitol, modifies the thermal properties of sorbitol in combination therewith, and, in effect, forms a lowered congealing point eutectic, that facilitates the addition and incorporation thereinto of flavouring agents.

While reference is made to saccharin generally, it is to be understood that the edible salts thereof, such as sodium, calcium and ammonium, are also useful and therefore are included within the scope of the present invention.

The flavouring agents suitable for use in the compositions of the present invention are all of the flavouring agents well known for use in food applications. Thus, such flavouring agents may include those derived from essential oils, as well as those characterised as either natural or artificial fruit flavours. Also, the flavours within the scope of the present invention would include bean-derived flavours, wine-derived flavours and pungent materials commonly known as spices.

More particularly, flavouring agents suitable for use in the compositions of the present invention include essential oils such as cinnamon, spearmint, peppermint, birch, anise and the like; natural fruit flavours derived from the essence of fruits such as apple, pear, peach, strawberry, cherry, apricot, orange, watermelon, banana and the like; bean-derived flavours such as coffee, cocoa and the like; wine-derived flavours such as curacao zin, other fermented fruit flavours, and the like; and pungent material such as affinin, pepper, mustard and the like.

The foregoing flavouring agents may be employed and prepared individually, or, where appropriate, may be employed and prepared in combination with each other. Thus, the above flavouring agents may be individually incorporated within the sorbitol mixture, and may thereafter be granulated and mixed in combination with each other to impart specific flavour effects to food products.

The amount of flavouring agent incorporated into the sorbitol mixture may vary widely, depending in part upon the thermal properties of the individual flavouring agent, as well as upon the specific product being prepared. For example, in the instance where the flavouring agent is relatively stable at the temperature at which it is added to the sorbitol mixture, a greater quantity of flavouring agent may be easily added to form the desired flavouring composition. Further, in the instance where a sorbitol candy is to be prepared, the amount of flavouring composition added to the candy may differ from the instances where the prepared flavouring composition is to be granulated and utilized as flavour crystals for incorporation into another food product.

In general, the present flavouring composition may contain up to about 11% by weight of flavouring agent, and preferably up to about 10% by weight of such flavouring agent, with amounts ranging from 0.1% by weight to 10% being most preferred. Naturally, the exact amount of flavouring agent may vary within the scope of the present invention.

The present flavouring composition may include various ingestible colourants, suitable for food application. For example, pigments such as titanium dioxide as well as dyes suitable for food, drug and cosmetic applications, known as F. D. & C. dyes and lakes, may be utilized. Acceptable dyes and lakes are preferably water-soluble, and include indigoid dye, known as F. D. & C Blue No. 2, which is the disodium salt of 5,5' - indigotindisulphonic acid. Similarly, the dye known as F. D. & C. Green No. 1, comprises a triphenylmethane dye and is the monosodium salt of 4 - [4 - (N - ethyl - p - sulphobenzylamino)diphenylmethylene] - [1 - (N - ethyl - N - p - sulphoniumbenzyl) - Δ2,5 - cyclohexadienimine]. A full recitation of all F. D. & C., and D. & C., and their corresponding chemical structures may be found in the Kirk-Othmer Encyclopedia of Chemical Technology, at Volume 5, Pages 857—884. The foregoing materials are presented for purposes of illustration only, and the flavouring composition of the present invention may include a variety of different colours.

In one embodiment of the present invention, the flavouring compositions include up to about 7% by weight, based on the weight of the total composite, of seed particles containing a quantity of sorbitol. The seed particles may be derived from previously prepared quantities of the flavouring composition, or may comprise ground crystals or fines of sorbitol alone. The seed particles are added for the purpose of initiating the solidification of the sorbitol mixture, after the flavouring agent has been incorporated therein.

In the instance where the seed particles comprise fines remaining from the granulation of an earlier batch of the flavouring composition after its solidification, the present invention confers an economy of manufacture. The seed particles of this embodiment may possess a composition that is equivalent in materials and their amounts, to the mixture under preparation, though some variation may exist from batch to batch. Also, while the flavouring agent incorporated in the seed particles may correspond to that of the composition under preparation, seed particles having a differing flavouring agent may be selected and used, in the instance where the respective flavours may be favourably compatible and in combination would yield a desirable flavour effect.

In an alternative embodiment hereof, where the seed particles are derived from monolithic sorbitol crystals, such crystals may be prepared from a particular variety of sorbitol having a crystalline structure known as the gamma crystalline polymorph. This specific crystalline structure, and its associated method of preparation, are disclosed in U.S. Patent No. 3,973,041, to DuRoss, accordingly incorporated herein. Sorbitol prepared thereby possesses a heat of fusion ranging from 38 to 46 calories per gram, and a melting range of from 96° to 101°C, and purportedly offers improved shelf stability in confectionery products.

Sorbitol having the gamma polymorphic crystal structure can be prepared merely from seed crystals having this structure, as they will promote the formation by the sorbitol present in the remainder of the batch, of a flavouring composition having sorbitol with the same crystal structure. Naturally, the sorbitol in the remainder of the batch may likewise originate in the gamma form; however, this is unnecessary. Additionally, the promotion of gamma crystal formation in the entire batch by this selective seeding technique assures that those fines retrieved from the granulation of the batch, will contain gamma crystalline sorbitol useful for seeding subsequent composition batches.

In the process of the present invention, the first step comprises the admixing of the sorbitol, mannitol and saccharin components. These materials may be combined in granular form prior to being heated, or may be individually heated and then mixed as liquids.

After mixing, the sorbitol, mannitol and saccharin are heated to a temperature of the order of about 200°C, to form an essentially stable, clear liquid. In practice, a slight brownish tint is sometimes observed due to slight caramelization of the sorbitol. During this heating step, water vapour evolution is observed and slight boiling takes place. At the point where the mixture reaches 200°C, any colouring desired in the final composite may be added.

The above mixture is thereafter cooled to a temperature below 70°C. Cooling may be conducted on a cold water bath, and the mixture may be slightly agitated. Naturally, other techniques and means for cooling the mixture may be employed, and the invention is not limited to the specific use of a water bath.

After the mixture drops below the temperature of 70°C, and preferably reaches the temperature of about 68°C, the flavouring agent may be added with sufficient agitation to disperse thoroughly the flavouring agent in the mixture. As noted earlier, an advantage of the present invention is that the flavouring agent may be incorporated at this lower temperature, with a resulting minimization of flavour loss due to volatization or "flash off". Thus, greater quantities of flavouring agent may be added and incorporated into the present composite.

The flavouring agent is preferably added slowly while under agitation to achieve thorough mixing, and preferably is added in aliquot portions, to minimize surface residence of the flavouring agent on the sorbitol. It has been found that, if the complete incorporation of the flavouring agent into the sorbitol is not achieved, and some flavouring agent remains on the surface of the sorbitol, the flavouring agent remaining on the sorbitol surface may volatize due to the action of the mixer.

After the addition of the flavouring agent is complete, one or more of the types of seed particles mentioned earlier, are added to the resulting mixture, to promote solidification. The seed particles are likewise added under agitation which is maintained for a time and intensity sufficient to incorporate thoroughly the seeds into the mixture.

The mixture is now ready for solidification, and may be moulded to a variety of shapes, depending upon the contemplated end use. For example, the composite while still liquid, may be cast upon a flat surface, to form a sheet. In commercial processes, casting may be performed against a moving cooled surface, in which case the material will solidify during its travel and form a continuous sheet. Alternatively, the liquid may be cast into individual trays, so that separate sheets will form.

In addition to the above, the liquid mixture may be cast into trays having defined therein recesses appropriately shaped so that the resulting solid flavouring composition will comprise a plurality of tablets or droplets, suitable upon solidification, for consumption as sugarless candies. Alternatively, the sheets or tablets may be granulated to form particles or beads that may be incorporated into a variety of products as the flavouring component. Preferably, the present flavouring composition upon solidification, is ground to form particles having approximately 25 mesh size, for use as the flavouring component of a variety of products. In a particular aspect of the present process, the solid composite may be ground with a commercial granulator having a size 18 mesh screen. The particles passing therethrough are then placed on a 25 mesh screen, and particles remaining thereon are retained as the final granular product. In such instance, the fines passing through both screens are gathered and may be later utilized as the seed particles for the preparation of further batches of the composition, as discussed earlier in detail.

In particulate form as described, the present flavouring composition may be incorporated into a variety of products as the flavouring component, and, for example, may be utilized in chewing gums, either alone, or in combination with other flavour forms. For example, the beads or particles may be used in combination with flavour additives in powdered or liquid form, or both, to provide a composite flavour sensation. The present flavouring compositions provide prolonged flavour sensation and release, and could thereby be used in cooperation with the same or different flavours within a given product, to provide a continuous flavour release extending over an increased time span.

The flavouring compositions of the present invention are useful in a comestible product, in addition to their preparation as sugarless candies, and as the flavour constituent of chewing gums. Thus, for example, the present flavouring composition may be utilized to provide both flavour and sweetness to foods such as breakfast cereals, dairy product and analogue toppings, flavoured fillings for baked goods, and the like.

The present invention will be better understood from a consideration of the following illustrative examples, wherein all percentages expressed are deemed percentages by weight.

Example I

A flavouring composition was prepared which utilized 77.85% sorbitol, 10% spearmint flavour, 5% mannitol, 0.15% saccharin and 7% of seed particles of similar composition derived from an earlier preparation. The sorbitol, mannitol and saccharin were mixed and heated to about 200°C, and thereafter cooled on a water bath with slight agitation to about 68°C. As the temperature approached 68°C, the flavouring agent was added slowly in aliquot portions, and with sufficient agitation to achieve thorough mixing. Thereafter, the seeds were incorporated with agitation and the resulting mixture was poured into trays to solidify.

Upon solidification, the resulting sheets of flavouring composition were ground in a Stokes granulator through a size 18 mesh screen. The particule passing through the screen were then placed on a 25 mesh screen and those particles remaining thereon were recovered for incorporation into comestible products. The particles were thereafter tested for shelf life, and found to retain majority of the flavour over periods of time of up to one year.

Example II

A similar formulation was prepared to that disclosed in Example I, with the exception that Kohnstamm Imitation Cherry Oil P798 was utilized as cherry flavour (instead of the spearmint), and was added in an amount of about 2%.

The quantities of mannitol, saccharin and seed particles remained the same, with the balance comprising sorbitol. The preparation of this flavouring composition otherwise proceeded identically to that of Example I, and the resulting flavour beads were similarly tested for shelf life, and found to retain their flavour over similar storage periods.

Example III

Five flavouring compositions were prepared in the manner set forth in Example I, with the respective flavours listed in Table I, below. Each of the flavouring compositions was prepared and tested in both chunk form, derived after solidification and initial fracture of the sheet material, as well as after granulation. The respective samples were initially categorized for the theoretical amount of total flavouring agent incorporated, and were thereafter actually measured to determine the total amount of flavouring agent actually contained, and the respective percentages of that flavouring agent actually encapsulated, as well as disposed on the surface of the composite. The results of these measurements is likewise set forth in Table I.

TABLE I
Measurement of percent of flavour encapsulation

| Sample No. | Flavouring agent | Total | Flavour content (%) | |
| --- | --- | --- | --- | --- |
| | | | Surface | Encapsulated |
| 1 | Peppermint—Chunk | 8.1 | 3.3 | 59.3 |
| | Peppermint—Ground | 7.5 | 4.6 | 38.7 |
| | Theoretical | 10 | 0 | 100 |
| 2 | Spearmint—Chunk | 9.4 | 0.76 | 91.9 |
| | Spearmint—Ground | 6.8 | 1.29 | 81.0 |
| | Theoretical | 10 | 0 | 100 |
| 3 | Cinammon—Chunk | 4.5 | 0.24 | 94.7 |
| | Cinammon—Ground | 4.3 | 1.31 | 69.5 |
| | Theoretical | 10 | 0 | 100 |
| 4 | Fruit—Chunk | 8.3 | 0.62 | 92.5 |
| | Fruit—Ground | 6.5 | 0.66 | 89.8 |
| | Theoretical | 10 | 0 | 100 |
| 5 | Bubble—Chunk | 8.7 | 0.48 | 94.5 |
| | Bubble—Ground | 8.0 | 1.25 | 84.4 |
| | Theoretical | 10 | 0 | 100 |

The results in Table I suggest that, with the exception of Sample No. 1, the majority of the flavour content of the composition was encapsulated, rather than disposed on the surface of the composite. This reflects the advantage of the present flavouring composition, in that the temperature of preparation is sufficiently reduced to minimize flavour "flash off". This further suggests that the flavour thus retained in encapsulated form, will exhibit improved shelf life, as release will occur only upon fracture of the capsules.

Example IV

A series of chewing gum samples was prepared that utilized the ground particles of the flavouring compositions prepared in Example III, above. Specifically, conventional sugarless chewing gum was modified to provide two variations of sorbitol flavouring compositions incorporation: in a first modification, the sorbitol beads containing the flavour replaced 20% of the liquid flavour conventionally employed; in the second modification, sorbitol beads replaced 20% of the liquid flavour, and an additional 10% of flavour was added in the form of a further quantity of sorbitol beads. The actual amount of beads utilized to provide the foregoing percentages of liquid flavour replacement, was derived from the measurements of total flavour and encapsulated flavour of the samples of ground composites set forth in Table I, above.

Each of the flavours set forth in Example III was therefore prepared in two variations, and a third control sample was likewise prepared to facilitate panel testing of each flavour. A panel of four adults was given a total of fifteen samples, representing each of the five flavours initially investigated in Example III. Each of the panelists chewed the respective samples for an identical period of time, and recorded subjective observations of flavour delivery. The general conclusions derived from the individual observations of the panelists are set forth below with reference to each of the five flavour categories.

1—Peppermint

No significant difference between either of the encapsulated flavour-containing samples and the control gum sample could be determined. A slightly harsher flavour was noted in the sample with the increased flavour while a metallic note was found in all of the samples, that is believed to be derived from the liquid flavour.

2—Spearmint

Of the three samples tested, the sample containing 10% extra flavour provided by the further increment of flavour prepared in accordance with the present invention, was found to be most balanced, with the best sweetness and flavour impact. The control was observed to be slow in delivery.

3—Cinnamon

In similar fashion to spearmint, described above, the chewing gum having 10% additional flavour provided by the flavour-containing compositions of the present invention, was found to have the best balance in sweetness and flavour impact. Likewise, the control was found to be slow in flavour delivery.

4—Fruit

The chewing gum prepared was 20% of the liquid flavour replaced by the flavour containing composite prepared by the present invention, was found to have the most rounded flavour and sweetness. The control was found to be over-sweet and the sample having 10% additional flavour was found to be harsh.

5—Bubble gum

No significant difference was found between the control sample and either sample having the flavour composite of the present invention.

From the foregoing subjective observations, the panel concluded that the major effect of the sorbitol-encapsulated flavour additions, was to change the delivery of the sweetness and flavour. As this effect was found to be favourable in some flavours and not in others, it was determined that flavour enhancement could be achieved when the proper level of the sorbitol-encapsulated flavour compositions was added. It was noted in conclusion that three out of the five flavours tested were improved by the substitution of the sorbitol-encapsulated flavour compositions for a like quantity of conventional liquid flavour.

Flavour compositions prepared with similar composition to those disclosed above, may be incorporated into the flavour ingredient of products such as chewing gums, in an amount, for example, of about 20% of the total flavour content, and flavour sensation of the chewing gum will be enhanced and extended.

**Claims**

1. A flavouring composition comprising:
a eutectic mixture of:— sorbitol, from 5% to 6% by weight of mannitol, and from 0.15% to 0.16% by weight of saccharin, the term "saccharin" including saccharin itself and edible salts thereof;
dispersed in the eutectic mixture, at least one flavouring agent in an amount of up to 11% by weight; and
from 0 to 7% by weight of seed particles containing a quantity of sorbitol;
wherein the percentages are based on the weight of the flavouring composition, and the balance of the composition is essentially the sorbitol of the eutectic mixture.

2. A composition according to Claim 1, wherein the seed particles consist of entirely or mainly of sorbitol.

3. A composition according to Claim 1 or 2, wherein the seed particles are prepared from a previously prepared quantity of a flavouring composition according to Claim 1.

4. A composition according to any preceding claim, which comprises up to 10% by weight of the flavouring agent, approximately 5% by weight of mannitol, approximately 0.15% by weight of saccharin, and approximately 7% by weight of the seed particles, with the balance to 100% essentially being sorbitol.

5. A composition according to any preceding claim, wherein the flavouring agent is selected from essential oils, synthetic fruit flavours, natural fruit flavours, bean-derived flavours, wine-derived flavours, pungent materials, and mixtures thereof.

6. A composition according to any preceding claim, wherein the flavouring agent is selected from cinnamon, spearmint, peppermint, birch, anise, apple, pear, peach, strawberry, cherry, apricot, orange, watermelon, banana, coffee, cocoa, curacao zin, affinin, pepper, mustard, and mixtures thereof.

7. A composition according to any preceding claim, which further includes at least one ingestible colourant.

8. A composition according to any preceding claim, wherein the composition is in tablet form.

9. A composition according to any one of Claims 1 to 8, wherein the composition is in particulate form.

10. A composition according to Claim 9, which has particles no larger than 25 mesh.

11. A process for preparing a flavouring composition according to any preceding claim, which process comprises:

   (a) preparing a eutectic mixture of:— sorbitol, from 5% to 6% by weight mannitol and from 0.15% to 0.16% by weight saccharin;

   (b) heating that mixture to a temperature of approximately 200°C;

   (c) cooling that mixture to a temperature below 70°C;

   (d) adding at least one flavouring agent, in an amount of up to 11% by weight, to the cooled mixture under agitation to disperse uniformly the flavouring agent therein;

   (e) adding to the mixture under agitation, up to 7% by weight of seed particles containing a quantity of sorbitol;

   (f) permitting the resulting mixture to solidify; and

   (g) recovering the flavouring composition;

wherein the total amount of sorbitol added is essentially equivalent to a balance of the composition, all percents being based on the weight of the composition.

12. A process according to Claim 11, wherein the mixture is cooled in step (c) with slight agitation.

13. A process according to Claim 11 or 12, wherein the mixture is cooled in step (c) to a temperature of approximately 68°C.

14. A process according to Claim 11, 12 or 13, wherein the flavouring agent, in step (d), is added slowly and in aliquot increments, and the mixture is agitated in an amount sufficient to disperse fully the flavouring agent therein.

15. A process according to Claim 11, 12, 13 or 14, wherein the flavouring composition is recovered by casting in a shallow tray to form a sheet.

16. A process according to Claim 11, 12, 13 or 14, wherein the flavouring composition is recovered as a plurality of candy-shaped pellets.

17. A process according to Claim 11, 12, 13 or 14, wherein the flavouring composition is recovered in particulate form.

18. A process according to Claim 17, wherein the flavouring composition is first cast on a flat surface to form a solid sheet, and that sheet is thereafter granulated to a particulate size of the order of 25 mesh.

19. A process according to any one of Claims 11 to 18, wherein the flavouring composition is incorporated into a comestible product.

20. A process according to Claim 19, wherein the flavouring composition is incorporated into a chewing gum.

**Patentansprüche**

1. Aromazusammensetzung folgendes enthaltend: eine eutektsiche Mischung von Sorbit, Mannit mit 5—6 Gew. % und Saccharin mit 0,15—0,16 Gew. %, wobei "Saccharin" sowohl eigentliches Saccharin wie essbare Saccharinsalze enthält; zerstreut in der eutektischen Mischung mindestens ein Aromamittel in einer Menge bis zu 11 Gew. %; und von 0 bis 7 Gew. % Samenpartikel, welche eine Menge Sorbit enthalten, wobei die Prozentsätze auf das Gewicht der Aromazusammensetzung bezogen sind und der Rest der Zusammensetzung im wesentlichen aus dem Sorbit der eutektischen Mischung besteht.

2. Aromazusammensetzung gemäss Anspruch 1, dadurch gekennzeichnet, dass die Samenpartikel ganz oder im wesentlichen aus Sorbit bestehen.

3. Aromazusammensetzung gemäss Anspruch 1 oder 2, dadurch gekennzeichnet, dass die Samenpartikel aus einer vorgängig vorbereiteten Menge einer Aromazusammensetzung gemäss Anspruch 1 vorbereitet sind.

4. Aromazusammensetzung gemäss einem vorangehenden Anspruch, dadurch gekennzeichnet, dass sie bis zu 10 Gew. % Aromamittel, circa 5 Gew. % Mannit, circa 0,15 Gew. % Saccharin und circa 7 Gew. % Samenpartikel enthält, wobei der Rest im wesentlichen Sorbit ist.

5. Aromazusammensetzung gemäss einem vorangehenden Anspruch, dadurch gekennzeichnet, dass das Aromamittel aus einer Gruppe bestehend aus ätherischen Oelen, synthetischen Fruchtaromen, natürlichen Furchtaromen, von Bohnen abgeleiteten Aromen, von Wein abgeleiteten Aromen, von scharfen Stoffen und von Mischungen derselben ausgewählt ist.

6. Aromazusammensetzung gemäss einem der vorangehenden Ansprüche, dadurch gekennzeichnet, dass das Aromamittel aus einer Gruppe bestehend aus Zimt, grüner Minze, Birke, Anis, Apfel, Birne, Pfirsich, Erdbeere, Kirsche, Aprikose, Orange, Wassermelone, Banane, Kaffee, Kakao, Curaçao, Affinin, Pfeffer, Senf und von Mischungen derselben ausgewählt ist.

7. Aromazusammensetzung gemäss einem der vorangehenden Ansprüche dadurch gekennzeichnet, dass es noch mindestens ein einnehmbares Färbungsmittel enthält.

8. Aromazusammensetzung gemäss einem der vorangehenden Ansprüche, dadurch gekennzeichnet, dass die Zusammensetzung Tablettenform besitzt.

9. Aromazusammensetzung gemäss einem der vorangehenden Ansprüche, dadurch gekennzeichnet, dass die Zusammensetzung die Form von Teilchen besitzt.

10. Aromazusammensetzung gemäss Anspruch 9, dadurch gekennzeichnet, dass die Teilchen kleiner als 25 mesh sind.

11. Verfahren für die Vorbereitung einer Aromazusammensetzung gemäss einem der vorangehenden Ansprüche, dadurch gekennzeichnet, dass es folgende Schritte aufweist:

   a) Vorbereitung einer eutektischen Mischung bestehend aus 5 bis 6 Gew. % Mannit und aus 0,15 bis 0,16 Gew. % Saccharin,

b) Aufwärmen dieser Mischung auf eine Temperatur von circa 200°C;

c) Abkühlen dieser Mischung auf eine Temperatur unter 70°C;

d) Hinzugeben von mindestens einem Aromamittel in einer Menge bis zu 11 Gew. % zur abgekühlten Mischung, wobei die Mischung bewegt wird, um das Aromamittel darin gleichmässig zu dispergieren;

e) Hinzugeben zur bewegten Mischung bis zu 7 Gew. % Samenpartikel, welche eine Menge Sorbit enthalten;

f) die erhaltene Mischung sich verfestigen lassen; und

g) die Aromazusammensetzung in Empfang nehmen, wobei die Gesamtmenge des zugegebenen Sorbit im wesentlichen den Rest der Zusammensetzung ausmacht und wobei die Gewichtsprozente sich auf das Gewicht der Zusammensetzung beziehen.

12. Verfahren gemäss Anspruch 11, dadurch gekennzeichnet dass die Mischung im Verfahrensschritt c) in leichter Bewegung während dem Abkühlen gehalten wird.

13. Verfahren gemäss Anspruch 11 oder 12, dadurch gekennzeichnet, dass die Mischung im Verfahrensschritt c) auf circa 68°C abgekühlt wird.

14. Verfahren gemäss einem der Ansprüche 11 bis 13, dadurch gekennzeichnet, dass im Verfahrensschritt d) das Aromamittel langsam und in gleichmässigen Teilmengen beigegeben wird und dass die Mischung genügend bewegt wird, damit sich das Aromamittel darin völlig dispergiert.

15. Verfahren gemäss einem der Ansprüche 11 bis 14, dadurch gekennzeichnet, dass die Aromazusammensetzung durch Giessen auf ein flaches Tablett, um eine Folie zu bilden, erhalten wird.

16. Verfahren gemäss einem der Ansprüche 11 bis 14, dadurch gekennzeichnet, dass die Aromazusammensetzung als mehrere Chargen in Bonbonform erhalten wird.

17. Verfahren gemäss einem der Ansprüche 11 bis 14, dadurch gekennzeichnet, dass die Aromazusammensetzung als Teilchen erhalten wird.

18. Verfahren gemäss Anspruch 17, dadurch gekennzeichnet, dass die Aromasuzammensetzung zuerst auf eine flache Fläche gegossen wird, um eine feste Folie zu bilden, und dass die Folie anschliessend in Teilchen der Grössenordnung von 25 mesh verkleinert wird.

19. Verfahren gemäss einem der Ansprüche 11 bis 18, dadurch gekennzeichnet, dass die Aromazusammensetzung in ein essbares Produkt einverleibt wird.

20. Verfahren gemäss Anspruch 19, dadurch gekennzeichnet, dass es einem Kaugummi einverleibt wird.

**Revendications**

1. Composition aromatisante comprenant:
un mélange eutectique de: sorbitol, de 5% à 6% en poids de mannitol, et de 0,15% à 0,16% en poids de saccharine, le terme "saccharine" étant utilisé pour désigner la saccharine proprement dite et les sels alimentaires de celle-ci;

au moins un agent aromatisant en une proportion allant jusqu'à 11% en poids dispersé dans le mélange eutectique; et

de 0 à 7% en poids de particules d'ensemencement contenant du sorbitol;

où les pourcentages ont exprimés en poids et par rapport à la composition aromatisante, le complément à 100% étant pour l'essentiel le sorbitol du mélange eutectique.

2. Composition selon la revendication 1, où les particules d'ensemencement sont constituées entièrement ou surtout de sorbitol.

3. Composition selon la revendication 1 ou 2, où les particules d'ensemencement proviennent d'une composition aromatisante préparée au préalable et ont la composition donnée dans la revendication 1.

4. Composition selon l'une quelconque des revendications qui précèdent contenant jusqu'à 10% en poids d'agent aromatisant, approximativement 5% en poids de mannitol, approximativement 0,15% en poids de saccharine et approximativement 7% en poids de particules d'ensemencement, le complément à 100% étant constitué pour l'essentiel de sorbitol.

5. Composition selon l'une quelconque des revendications qui précèdent, où l'agent aromatisant est choisi dans le groupe des huiles essentielles, des arômes synthétiques imitant les arômes de fruits, des arômes naturels de fruits, des arômes dérivés de diverses fèves, des arômes dérivés de vins, des composés au goût piquant, et des mélanges de ces produits.

6. Composition selon l'une quelconque des revendications qui précèdent, où l'agent aromatisant est choisi dans le groupe comprenant la cannelle, la menthe poivrée, la menthe verte, le bouleau, l'anis, la pomme, la poire, la pêche, la fraise, la cerise, l'abricot, l'orange, la pastèque, la banane, le café, le chocolat, le curaçao, l'affinine, le poivre, la moutarde, et les mélanges de ces produits.

7. Composition selon l'une quelconque des revendications qui précèdent, et qui en outre comporte au moins un colorant alimentaire.

8. Composition selon l'une quelconque des revendications qui précèdent, où la composition prend la forme de pastilles.

9. Composition selon l'une quelconque des revendications 1 à 8, où la composition prend la forme de granulés.

10. Composition selon la revendication 9, où les granulés n'ont pas une taille supérieure à 25 mesh.

11. Procédé de préparation d'une composition aromatisante selon l'une quelconque des revendications qui précèdent, lequel consiste à:

(a) préparer un mélange eutectique comprenant du sorbitol, de 5% à 6% en poids de mannitol et de 0,15% à 0,16% en poids de saccharine;

(b) chauffer le mélange à une température d'environ 200°C;

(c) refroidir ce mélange à une température inférieure à 70°C;

(d) ajouter au moins un agent aromatisant dans une proportion pouvant aller jusqu'à 11% en poids au mélange refroidi, cette addition se faisant sous agitation de manière à assurer une dispersion uniforme de cet agent;

(e) ajouter à cette dispersion en maintenant l'agitation une quantité pouvant aller jusqu'à 7% en poids de particules d'ensemencement contenant du sorbitol;

(f) laisser le mélange obtenu se solidifier; et à

(g) récupérer la composition aromatisante;

la quantité totale de sorbitol utilisée ci-dessus correspondant au complément à 100% de la composition finalle et les pourcentages donnés ci-dessus étant exprimés en poids et par rapport à cette composition.

12. Procédé selon la revendication 11, où le mélange est refroidi dans la phase (c) sous une légère agitation.

13. Procédé selon la revendication 11 ou 12, où le mélange est refroidi dans la phase (c) à une température d'environ 68°C.

14. Procédé selon la revendication 11, 12 ou 13, où l'agent aromatisant est ajouté dans la phase (d) lentement et par portions aliquotes, et où le liquide est suffisamment agité pour que l'agent aromatissant y soit complétement dispersé.

15. Procédé selon la revendication 11, 12, 13 ou 14, où la composition aromatisante est obtenue en la coulant dans un plateau peu profond où elle se solidifie en formant une plaque.

16. Procédé selon la revendication 11, 12, 13 ou 14, où la composition aromatisante est obtenue sous la forme de bonbons.

17. Procédé selon la revendications 11, 12, 13 ou 14, où la composition aromatisante est obtenue sous la forme de granulés.

18. Procédé selon la revendication 17, où la composition aromatisante est d'abord coulée sur une surface plane pour former une plaque solide et où cette plaque est ensuite broyée pour obtenir des granulés d'environ 25 mesh.

19. Procédé selon l'une quelconque des revendications 11 à 18, où la composition aromatisante est incorporée dans un produite alimentaire.

20. Procédé selon la revendication 19, où la composition aromatisante est incorporée dans du chewing-gum.